# EUROPEAN PATENT APPLICATION

(11) **EP 1 780 954 A1**
(43) Date of publication of application: **02.05.2007**
(21) Application number: 05758300.7
(22) Date of filing: 11.07.2005
(51) Int. Cl.: H04L 12/46, H04L 29/06

(54) **INFORMATION COMMUNICATION DEVICE, INFORMATION COMMUNICATION METHOD, AND PROGRAM**

(30) Priority: 20.07.2004 JP 2004211327
(71) Applicant: Pioneer Corporation, Tokyo 153-8654 (JP)
(72) Inventor: SUZUKI, Shinji, c/o PIONEER CORPORATION, Tokorozawa-shi, Saitama 3598522 (JP); USUBA, Hidemi, c/o PIONEER CORPORATION, Tokorozawa-shi, Saitama 3598522 (JP)
(74) Representative: Skuhra, Udo
(86) International application number: PCT/JP2005/012765
(87) International publication number: WO 2006/009000

(57) **Abstract**

A purpose of the present invention is given as follows: That is, QoS of isochronous data can be effectively secured, and asynchronous data can be transferred with a small delay.

In an information communication apparatus 100 of the present invention, in which both isochronous data and asynchronous data which are received by an IEEE 1394 receiving unit 210 based upon IEEE 1394 are transmitted by an IEEE 802.11 transmitting unit 300 based upon IEEE 802.11, the information communication apparatus 100 is equipped with: a packetizing unit (1) 230 for converting the isochronous data into data in a packet format of IEEE 802.11; and another packetizing unit (2) 240 for converting the asynchronous data into data in a packet formed of IEEE 802.11 based upon the packet format of the isochronous data converted by the packetizing unit (1) 230.

## Description

### Technical Field

The present invention is related to an information communication apparatus, an information communication method, and a program.

### Background Art

Very recently, in wireless transferring operations, high-speed transfer modes have been standardized based upon IEEE 802.11a and IEEE 802.11g, so that picture signals of HD qualities can be transmitted. Also, while IEEE 802.11e is now under discussion, QoS (Quality of service) controls during wireless transferring operations are realized by this standard.

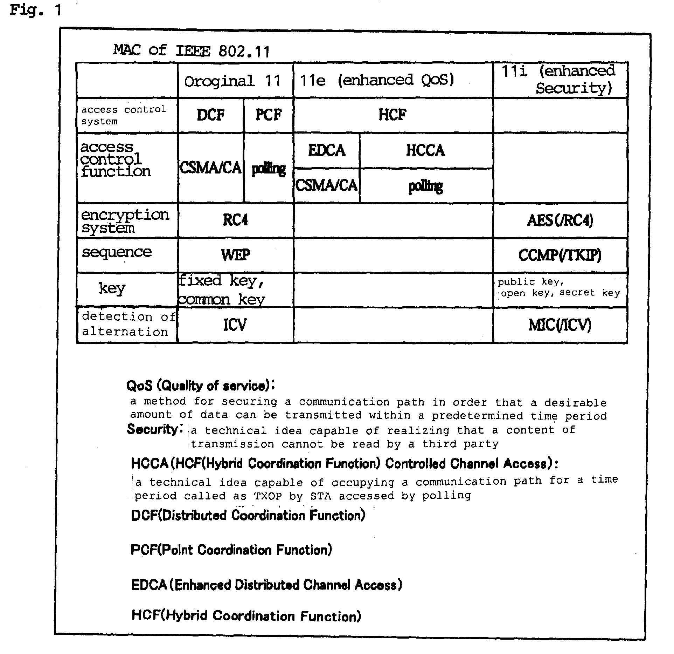

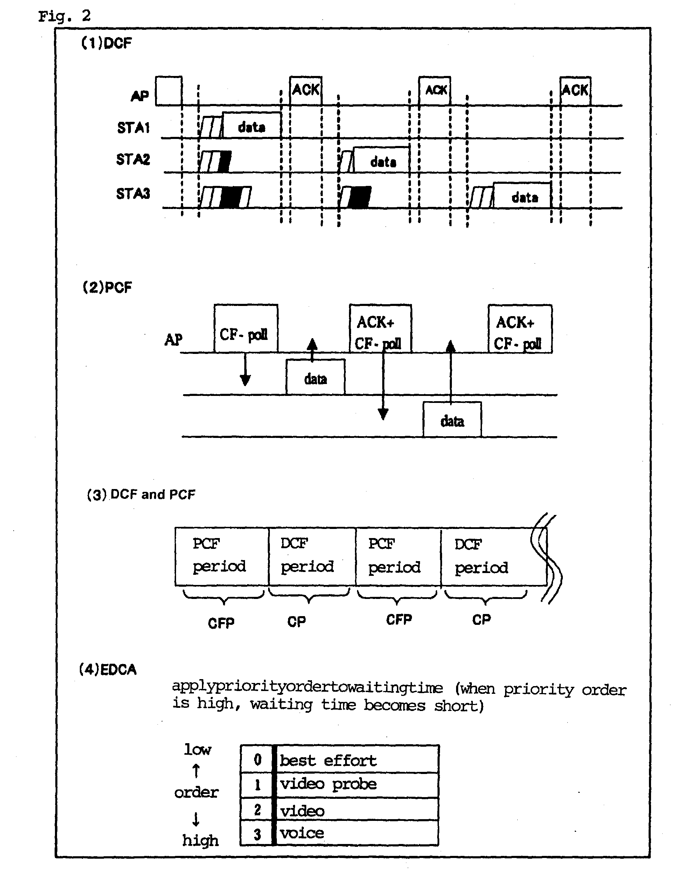

Fig. 1 shows a basic concept as to IEEE 802.11, 802. 11e, and 802.11i. Also, Fig. 2 represents time charts for DCF (Distributed Coordination Function) and PCF (Point Coordination Function) which correspond to the access control system of IEEE 802.11, and also shows priority orders of EDCA (Enhanced Distributed Channel Access) which corresponds to the access control function thereof.

As shown in Fig. 1, in the transfer control operations based upon IEEE 802.11e, there are the EDCA system (refer to Fig. 2(4)), and the HCCA (HCF Controlled Channel Access; HCF: Hybrid Coordination Function) system. In the EDCA system, priority orders are applied to packets, so that transmittable probability as to packets having higher priority levels is increased. The HCCA system is capable of occupying communication paths by way of polling. Since such technical ideas are realized, wireless transferring operations of digital AV contents can be realized in a high quality.

It should be understood that the QoS control corresponds to such a method capable of securing a communication path in such a manner that a desirable amount of data can be transmitted within a desirable time period; and the HCCA system defined in IEEE 802.11e corresponds to such a plan that an STA (terminal station) which is called by polling can occupy the communication path for a time period called as TXOP. Also, Security defined in IEEE 802.11i corresponds to such a plan that transmitted contents cannot be read by a third party.

On the other hand, as a plan for transferring digital AV contents in a wired manner, IEEE 1394 standard becomes famous . In IEEE 1394, both an isochronous transferring operation for transferring isochronous data, and an asynchronous transferring operation for transferring asynchronous data have been standardized.

The isochronous transferring operation has a major object to supply stream data such as MPEG-TS. To this end, a plan capable of guaranteeing QoS has been incorporated, and the QoS of transferred data is guaranteed by securing a band. The asynchronous transferring operation has an object to transfer commands and the like, and the commands are transferred by employing the remaining band portion of the band which is secured in the isochronous transferring operation. Very currently, technical ideas for transferring contents which are transferred based on IEEE 1394 via bridges by utilizing the transfer system based on IEEE 802.11 have been proposed. For instance, these technical ideas have been considered by Wireless Working Group etc. in IEEE 1394TA.

On the other hand, as methods for converting the IEEE 802 protocol into the IEEE 1394 protocol, such technical ideas capable of converting IEEE 802 frames into either isochronous packets or asynchronous packets of IEEE 1394 are known in this field (refer to, for example, patent publication 1).
Patent Publication 1: JP-A-2003-234754

### Disclosure of the Invention

### Problems that the Invention is to Solve

The method disclosed in the conventional techniques has determined that as to a conversion to either an isochronous packet or an asynchronous packet, the conversion to which packet is determined while a protocol type, a source IP address, and a port number are employed as an information source. However, since the above-described conventional techniques have paid attentions to such a packet conversion from IEEE 802 to IEEE 1394, these conventional techniques have not considered the following view point: That is, when IEEE 1394 information is conversely converted into IEEE 802.11 information, transfer characteristics of the respective IEEE systems are different from each other, so that optimum parameter setting operations must be different from each other.

The conventionally proposed bridge method is mainly constituted by the routing method, or the clock synchronizing method. However, since IEEE 802.11 and IEEE 1394 have the different physical characteristics from each other, problems may occur due to this reason.

That is, as a first problem, such a problem occurs in a packet length and a delay time with respect to this packet length. A specific idea is required in such a case where contents which require broad bands such as HD contents are transmitted over the IEEE 802.11 network. For instance, contents of approximately 24 Mbps are present in Japanese digital broadcasting systems. To the contrary, in IEEE 802.11, even in such high-speed modes as IEE 802.11a and IEEE 802.11g, contents cannot be transferred up to throughputs of approximately 30 Mbps. As a consequence, transfer parameters capable of effectively utilizing bands must be set.

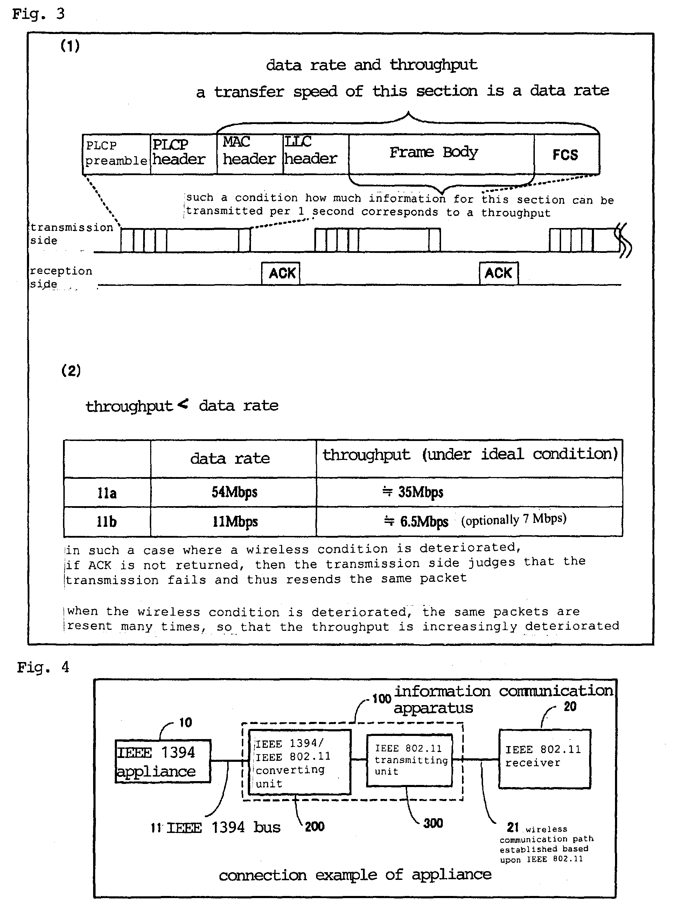

Fig. 3 is an explanatory diagram for explaining a relationship between a transfer rate and a throughput. As indicated in Fig. 3(1), in the transfer control systems based upon IEEE 802.11, such a system is employed in which while ACK is returned every time a packet is transferred, packets are transferred by confirming that the packet could be transferred. In the transfer control systems based upon IEEE 802.11e, there is such a method that several pieces of packets are grouped to be sent, and then, ACK is returned with respect to this grouped packet. However, this transfer control method is similar to the above-explained transfer control method as to such a technical point that ACK must be returned every time a certain amount of information is transferred.

Since a throughput is lowered by repeating ACK, a total number of ACKs is required to be reduced in order to improve the throughput. An amount of data for each of packets is increased within the range recognized by the specification of IEEE 802.11, so that a total number of ACKs can be relatively reduced.

On the other hand, IEEE 802.11 employs such a method of a resending operation as a method of solving a transfer error. After a packet has been transferred, the transmission side waits that ACK is returned from the reception side. In such a case that the reception side cannot correctly receive the packet, the reception side does not return ACK. In the case where the ACK is not returned, the transmission side resends data.

On the other hand, as previously explained, in order to improve the throughput, it is required to make the packet length longer. However, this technical idea has a demerit in view of the packet error rate (namely, probability when errors are produced for each of packets) . Since either IEEE 802.lla or IEEE 802.11g employs OFDM as the modulation system, disturbances caused by multipath matters may be solved by this modulation system to some extent.

The below-mentioned descriptions are made based upon such an initial condition that a transfer error implies such an error which is produced at random in connection with a deterioration in reception sensitivities.

The random noise occurs in equal probability with respect to each of bits, so that packet error rates are deteriorated since packet lengths are prolonged. As a consequence, probability when data is resent is increased. In such stream data as MPEG-TS, it is required that transferring of all of data must be guaranteed. Accordingly, the resending operations must be repeatedly carried out until packets are firmly transferred.

On the other hand, in order to receive the stream data while the reception side allows the resending operation, buffering is required, so that delays are produced. As a result, if the data are firmly transferred, then the delay is increased. Generally speaking, an occurrence of a delay in a stream transferring operation is not desirable. However, as previously explained, in the case where the QoS and the delay may have a trade off relationship, there are some possibilities that the QoS performance may be required although the delays are sacrificed to some extent, since necessary performance must be obtained.

On one hand, in such a case that information which is transferred by the asynchronous mode on the IEEE 1394 network is limited only to command transferring operation, this information is not so large amount of information. On the other hand, in the definitions of IEEE 1394, there is a definition about a maximum time until a response to a command request is returned, so that a large delay cannot be permitted. As a consequence, when an asynchronous transferring operation is carried out in a wireless manner, it is desirable to reduce delays. This condition is not always coincident with such a condition that an isochronous transferring operation is carried out in a wireless manner.

As a second problem, there is a problem of securing a band. In IEEE 1394, a band is secured in an isochronous transferring operation, whereas an asynchronous transferring operation is carried out by employing the remaining band. When a bridging operation from an IEEE 13 94 network to an IEEE 802.11 network is performed, it should be performed that a band is similarly secured in an isochronous transferring operation, whereas an asynchronous transferring operation is similarly carried out by employing the remaining band. However, such a bridging method has not yet been proposed up to now. As to problems that the present invention is to solve, the above-explained problems are conceived as one example.

### Means for Solving the Problems

An information communication apparatus of the present invention is featured by such an information communication apparatus having first information communicating means for receiving information which is transferred based upon a communication system containing an isochronous communication system and an asynchronous communication system; and second information communicating means for transmitting the information based upon a wireless communication system, comprising: first converting means for converting the information which is transferred based upon the isochronous communication system into a packet based upon the wireless communication system; and second converting means for converting the information which is transferred based upon the asynchronous communication system into a packet of the wireless communication system based upon the packet of the isochronous communication system converted by the first converting means; in which a packet length of the packet converted by the first converting means becomes longer than a packet length of the packet converted by the second converting means.

An information communication method of the present invention is featured by such an information communication method with employment of: first information communicating means for receiving information which is transferred based upon a communication system containing an isochronous communication system and an asynchronous communication system; and second information communicating means for transmitting the information based upon a wireless communication system, comprising: a first converting step for converting the information which is transferred based upon the isochronous communication system into a packet based upon the wireless communication system; and a second converting step for converting the information which is transferred based upon the asynchronous communication system into a packet of the wireless communication system based upon the packet of the isochronous communication system converted by the first converting means; in which a packet length of the packet converted by the first converting step becomes longer than a packet length of the packet converted by the second converting step.

A program of the present invention is featured by such a program for performing an information communication by employing: first information communicating means for receiving information which is transferred based upon a communication system containing an isochronous communication system and an asynchronous communication system; and second information communicating means for transmitting the information based upon a wireless communication system, in which the program causes a computer to execute: a first converting step for converting the information which is transferred based upon the isochronous communication system into a packet based upon the wireless communication system; and a second converting step for converting the information which is transferred based upon the asynchronous communication system into a packet of the wireless communication system based upon the packet of the isochronous communication system converted by the first converting means; and in which a packet length of the packet converted by the first converting step becomes longer than a packet length of the packet converted by the second converting step.

### Brief Description of the Drawings

Fig. 1 is a diagram for representing a basic concept as to IEEE 802.11, 802.11e, and 802.11i.
Fig. 2 is a diagram for representing time charts of DCF and PCF corresponding to the access control system of IEEE 802.11, and a concept as to priority orders of EDCA corresponding to an access control function.
Fig. 3 is a diagram for showing a relationship between a data rate and a throughput.
Fig. 4 is a diagram for indicating a connection example of an information communication apparatus employed for explaining an embodiment mode 1 of the present invention.
Fig. 5 is a diagram for showing a schematic arrangement of the information communication apparatus employed for describing the embodiment mode 1 of the present invention.
Fig. 6 is a diagram for showing a schematic arrangement of an IEEE 1394 receiving unit in the embodiment mode of the present invention.
Fig. 7 is a diagram for representing a schematic arrangement of a link layer processing unit in the embodiment mode of the present invention.
Fig. 8 is a diagram for representing a schematic arrangement of an IEEE 802.11 transmitting unit in the embodiment mode of the present invention.
Fig. 9 is a flow chart for indicating operations of the information communication apparatus of the present embodiment mode.
Fig. 10 is a diagram for showing a packet structure of isochronous data.
Fig. 11 is a diagram for representing a packet structure of asynchronous data.
Fig. 12 is a diagram for indicating a packet structure in IEEE 802.11.
Fig. 13 is a diagram for indicating a relationship between quantities of MPEG-TS per 1 packet and time required to transmit 1596 pieces of TS packets.
Fig. 14 is a diagram for indicating a result of calculating a TS packet number vs. an error rate in the case where a plurality of MPEG-TS packets are entered to 1 wireless packet.
Fig. 15 is a diagram for indicating a relationship between a total number of TS packets per 1 packet and time required to transmit 1596 pieces of TS packets.

### Description of Reference Numerals and Signs

Reference numerals shown in the drawings are given as follows: Reference numeral 100 shows an information communication apparatus; reference numeral 200 indicates an IEEE 1394/IEEE 802.11 converting unit; reference numeral 210 shows an IEEE 1394 receiving unit; reference numeral 211 indicates an IEEE 1394 I/O circuit; reference numeral 212 represents a PHY layer processing unit; reference numeral 220 shows a Link layer processing unit; reference numeral 221 indicates an isochronous data processing unit; reference numeral 222 shows an own node destination isochronous data detecting unit; reference numeral 223 represents an asynchronous data processing unit; reference numeral 224 shows an own node destination asynchronous data extracting unit; reference numeral 230 indicates a packetizing unit (1) (isoshynchronous data packetizing unit); reference numeral 240 indicates a packetizing unit (2) (asynchronous data packetizing unit); and reference numeral 300 shows an IEEE 802.11 transmitting unit.

### Best Mode for Carrying Out the Invention

### [EMBODIMENT MODE 1]

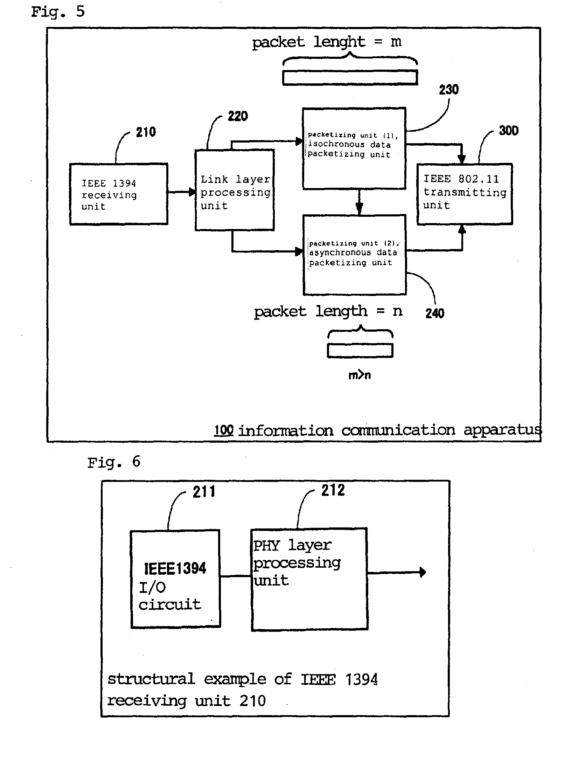

Fig. 4 indicates a schematic arrangement of an information communication apparatus 100 and a connection example thereof, which are provided in order to explain an embodiment mode 1 of the present invention. As shown in Fig. 4**,** the information communication apparatus 100 of the embodiment mode 1 contains an IEEE 1394/IEEE 802.11 converting unit 200, and an IEEE 802.11 transmitting unit 300 corresponding to one example of a second information communicating means. The information communication apparatus 100 is connected via an IEEE 1394 bus 11 to an IEEE 1394 appliance 10, and is connected through a wireless communication path 21 operated based upon IEEE 802.1.1 to an IEEE 802.11 receiver 20. The IEEE 1394/IEEE 802.11 converting unit 200 converts such an information into packet format information defined based upon IEEE 802.11 corresponding to one example of wireless communication systems. This information is received by the communication system defined by IEEE 1394 corresponding to one example of communication systems which contains both an isochronous communication system and an asynchronous communication system.

Fig. 5 is a block diagram for showing the information communication apparatus 100 of the present embodiment mode. The information communication apparatus 100 of the present embodiment mode contains an IEEE 1394 receiving unit 210 functioning as a first information communicating means; a Link layer processing unit 220; an isochronous data packetizing unit (namely, packetizing unit (1) functioning as first converting means) 230; an asynchronous data packetizing unit (namely, packetizing unit (2) functioning as second converting means) 240; and an IEEE 802.11 transmitting unit 300.

As shown in Fig. 5, in the present embodiment mode, a packet length "m" of isochronous data (isochronous communication information) which is produced by the isochronous data packetizing unit (packetizing unit (1)) 230 is longer than a packet length "n" of asynchronous data (asynchronous communication information) which is produced by the asynchronous data packetizing unit (packetizing unit (2)) 240.

Fig. 6 indicates a structural example as to the IEEE 1394 receiving unit 210 shown in Fig. 5. The IEEE 1394 receiving unit 210 contains an IEEE 1394 I/O circuit 211 and a PHY layer processing unit 212, while the IEEE 1394 I/O circuit 211 and the PHY layer processing unit 212 may be realized by such an arrangement defined by the IEEE 1394 standards. The IEEE 1394 standards involve IEEE 1394-1995, IEEE 1394a, IEEE 1394b, and the like. Although arrangements defined by these IEEE 1394 standards are different from each other, any of these arrangements may be employed in the present embodiment mode.

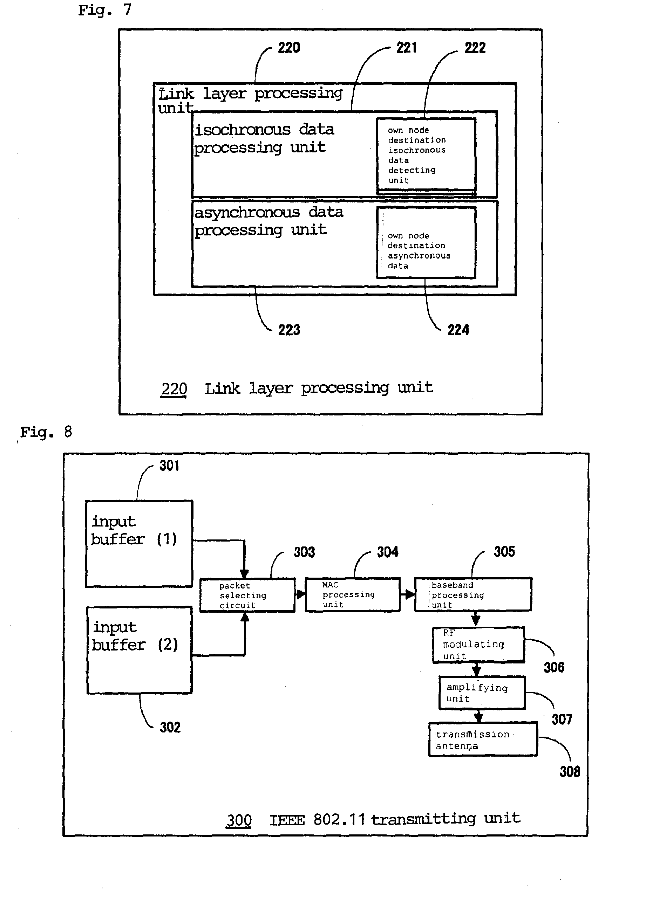

Fig. 7 indicates a structural example of the Link layer processing unit 220. The Link layer processing unit 220 contains an isochronous data processing unit 221 having the own node destination isochronous data detecting unit 222, and an asynchronous data processing unit 223 having the own node destination asynchronous data extracting unit 224. Both the isochronous data processing unit 221 and the asynchronous data processing unit 223 may be realized by a hardware logic, a software process operation, or a hybrid structure made by the hardware logic and the software process operation. These isochronous and asynchronous data processing units 221 and 223 extract an isochronous packet and an asynchronous packet by executing such process operations defined by the Link layer and the transaction layer in the IEEE 1394 standard.

Also, the packetizing units (1), (2) (230, 240) indicated in Fig. 5 may be realized by a hardware logic, a software process operation, or a hybrid structure made by the hardware logic and the software process operation. An actual operation may be achieved by executing a desirable algorithm. Detailed operations and indications of the algorithm will be explained in the below-mentioned effect item.

Fig. 8 indicates a structural example as to the IEEE 802.11 transmitting unit 300 shown in Fig. 5. The IEEE 802.11 transmitting unit 300 contains an input buffer (1) 301, another input buffer (2) 302, a packet selecting circuit 303, a MAC processing unit 304, a baseband processing unit 305, an RF modulating unit 306, an amplifying unit 307, and a transmission antenna 308.

Next, a description is made of operations of the information communication apparatus 100 according to the present embodiment mode. The information communication apparatus 100 converts information received based upon the IEEE 1394 system into a wireless protocol based upon the IEEE 802.11 system. For instance, when information is transmitted from the IEEE 1394 appliance 10 of a left end shown in Fig. 1 to the IEEE 802.11 receiver 20 of a right end, the information communication apparatus 100 is employed.

When such an arrangement is employed, the information communication apparatus 100 functions as a bridge between the IEEE 1394 protocol and the IEEE 802.11 protocol. While various sorts of bridge structures have been proposed, there is a plurality of methods which may be employed in the present embodiment mode.

In the present embodiment mode, for the sake of convenience, a description is made of such an exemplification that an IEEE 1394 bus 11 shown in Fig. 4 is operated based upon a protocol which does not consider the bridge environment, and the information communication apparatus 100 has such a function that signals transmitted to the own node based upon IEEE 1394 are automatically routed to IEEE 802.11.

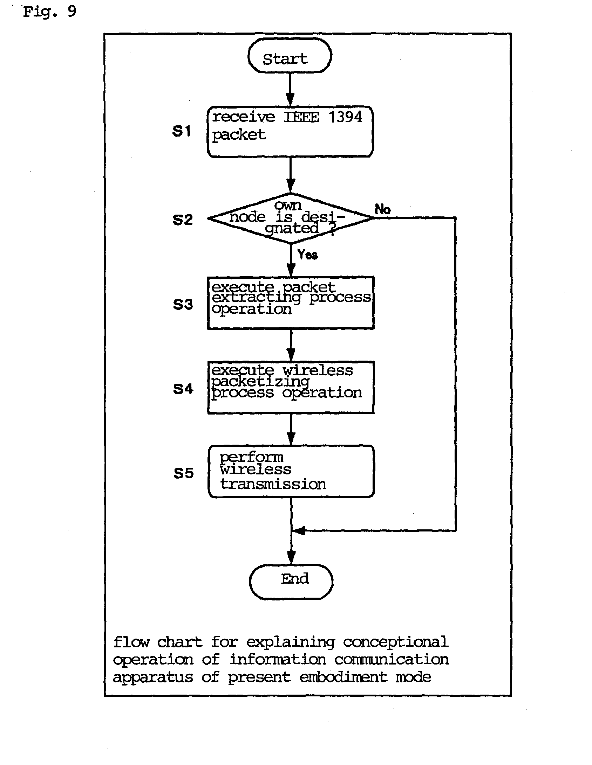

Fig. 9 shows a flow chart for explaining operations executed in the information communication apparatus 100. A first description is made of operations in the case that the information communication apparatus 100 receives information from an IEEE 1394 network, and then, extracts a packet from the received information. That is, the information transmitted based upon IEEE 1394 is received by the IEEE 1394 receiving unit 210 shown in Fig. 5 (step S1) . As represented in Fig. 6, the IEEE 1394 receiving unit 210 is constituted by the I/O circuit unit 211 and the PHY processing unit 212. The I/O circuit 211 is arranged by a connector and an electric interface unit.

The PHY processing unit 212 corresponds to such a physical layer processing unit which is defined by the IEEE 1394 standard (there is no specific restriction as to IEEE 1394-1995, IEEE 1394a, IEEE 1394b, IEEE 1394c, and the like) . In this PHY processing unit 212, an electric process operation and arbitration are carried out, and a bus resetting process operation is performed.

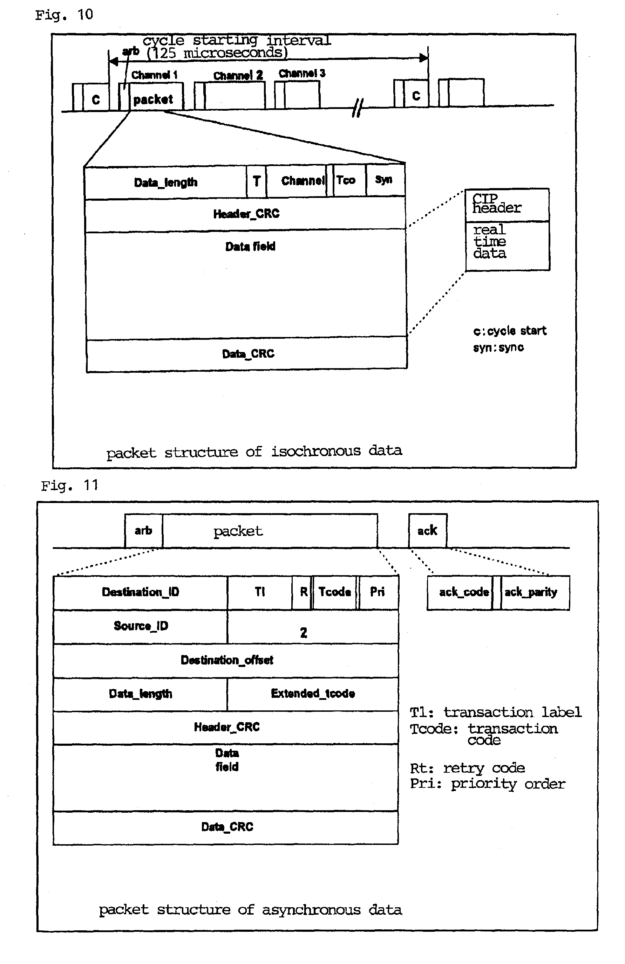

Next, the Link layer processing unit 220 shown in Fig. 5 detects a packet directed to the own node (step S2), and extracts the packet (step S3). Fig. 10 indicates a packet structure of isochronous data.

Both a data transmitter and a data receiver operable on IEEE 1394 declare a use band and a use channel with respect to an IRM (Isochronous Resource Manager) . When a resource use permission is issued from the IRM, an isochronous transmission can be carried out by employing the declared channel. A rule for determining that any one of the transmitter and the receiver makes a declaration is not exclusively defined, depending upon a combination of appliances. However, a portion of this rule is explained as the guide line in IEEE 1394 TA (IEEE 1394 Trade Association). As a result, the transmitter transmits isochronous data in accordance with the above-described packet structure.

In the case where information indicated in a channel contained in the above-described packet is coincident with the channel which is wanted to be received, the Link layer processing unit 220 shown in the present embodiment mode receives this packet and supplies the received packet to the post stage thereof. In the case where information indicated in a channel contained in the above-described packet is not coincident with the channel which is wanted to be received, the Link layer processing unit 220 does not process this packet.

Fig. 11 indicates a structure of a packet of asynchronous data. In this packet, Destination_ID and Source_ID are formed by a self_ID process based upon IDs which are applied to the respective nodes in a unique manner every time a bus reset is performed. A process for applying IDs and a process by which the respective nodes grasp IDs of the respective nodes including the own node have been defined in the IEEE 1394 standard. The Link layer processing unit 220 shown in this embodiment mode defects such a fact that Destination_ID contained in the packet corresponds to an ID which has been applied to the own node, and then, supplies the detected Destination_ID to the post stage thereof.

Since the above-described process operation is carried out, an isochronous signal and an asynchronous signal which are sent to the own node can be selectively received among the signals transferred based on IEEE 1394. Next, each of the signals is packetized for a wireless transfer purpose (step 84) .

Since IEEE 802.11 is the transfer system of the packet base, there is no definition as to a packet length per 1 packet in this standard, so that the packet length per 1 packet may be freely set unless this packet length is contradictory to other parameters. Under such a circumstance, a description is made of such a packet length which is suitable for an isochronous data transfer operation.

The isochronous transmission defined in IEEE 1394 constitutes a system suitable for transferring such signals which require a communication quality (QoS) as video signals and audio signals. As a consequence, even in such a case where these signals are communicated over a wireless field, it is preferable to employ such a communication system whose QoS is secured.

In IEEE 802.11, while IEEE 802.11e is under discussion as the MAC expanded specification in order to improve QoS, this expanded specification defines that a communication right is given to which terminal. Under wireless environments, since there are some possibilities that communication qualities are deteriorated due to deterioration in electromagnetic wave conditions, the communication system capable of firmly performing communications even in such a case must be considered.

In IEEE 802 .11a and IEEE 802.11g, the transfer rates (transfer speeds) up to 54 Mbps in maximum have been defined as communication rates. However, in an actual case, there is such a relationship that the higher the communication rate is increased, the shorter the transfer distance is decreased. As a result, in order to realize a long distance transmission, it is desirable to set transfer rates to low rates.

On the other hand, in order to transfer, for example, a video signal having an HD quality, a high throughput is required. In the case of Japanese digital broadcasting systems, it is so designed that the throughput of 24 Mbps is required. In order to transfer a desirable throughput in a low transfer rate, a possibly effective transfer method within the range recognized by the IEEE 802.11 standard is necessarily required.

As previously described, depending upon electromagnetic wave environments, there are some possibilities that electromagnetic waves cannot be received under normal condition since communication qualities are deteriorated in the case of wireless communications. To improve this aspect, the communication quality improving technique by the resend rule has been incorporated in IEEE 802.11.

Next, a description is made of a relationship between an effective transfer operation in view of packet lengths and the resend rule. In the transfer systembasedupon IEEE 802.11, when a transfer error is not considered, if one packet length is made long, then a transfer efficiency is increased. Also, in such a case where data having a certain bit length is subdivided into several data packets and then these data packets are transmitted, the shorter the packet length becomes, the larger the total number of packets is increased. As a consequence, since an ACK response is waited for 1 packet, an ACK resending time becomes a loss time. In other words, the larger the total number of packets is increased, the larger the total number of ACK responses is increased, so that the loss time is increased.

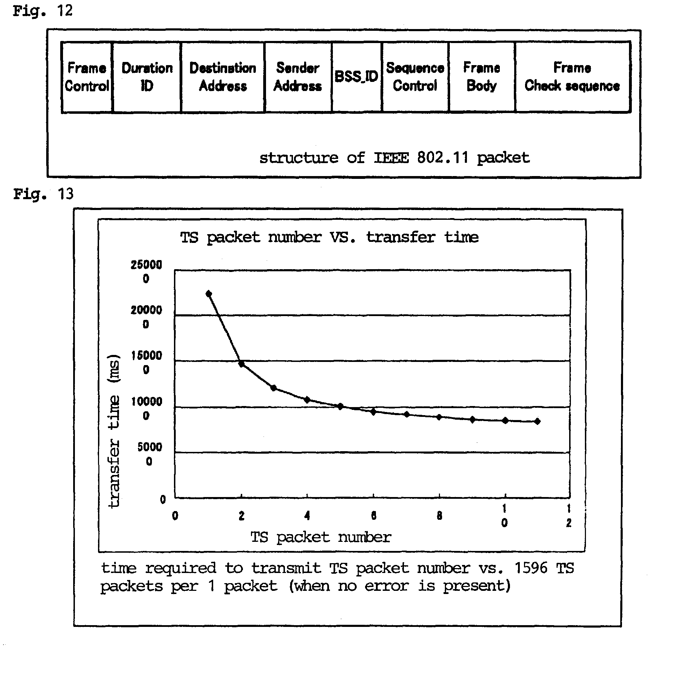

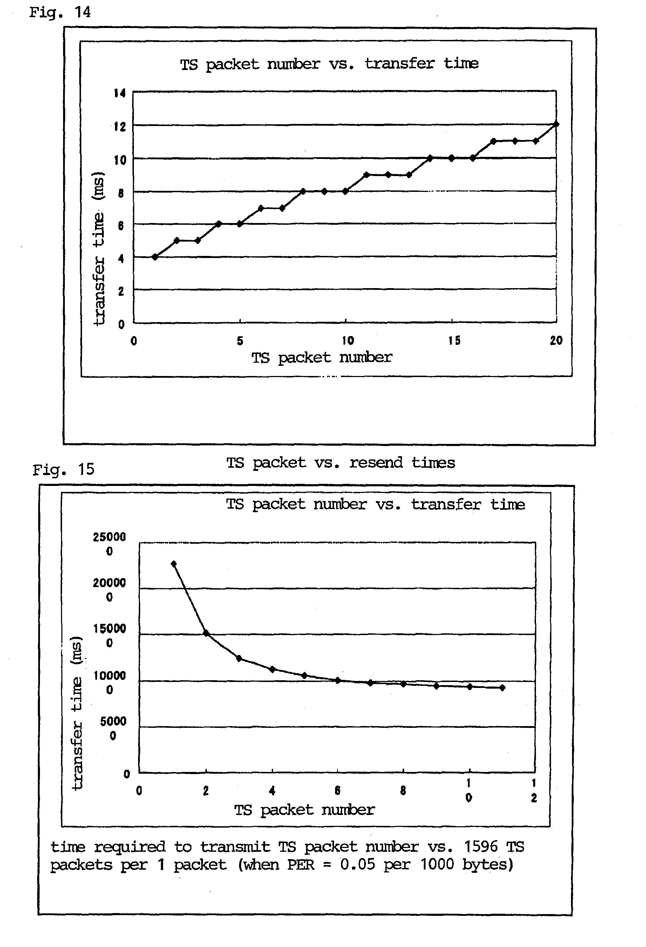

Fig. 12 represents a packet structure in IEEE 802.11. For example, when a plurality of MPEG-TS signals constructed of 188 bytes are entered in a portion of Frame Body in Fig. 12, such a relationship between a total number of MPEG-TS signals per 1 packet and time required for sending out 1596 pieces of TS packets is represented in Fig. 13. The PHY rate is 36 Mbps.

However, in wireless transfer operation which is different from a wired transfer operation, there are some possibilities that certainty of transfer operations may be deteriorated due to various factors. For instance, the following factors may be conceived: a distance between a transmitter and a receiver is considerably made long; a sensitivity is deteriorated by an article which shields electromagnetic waves; interference is produced from either appliances which transmit electromagnetic waves in the same frequency range; multi-path interference occurs; and the like.

In IEEE 802.11, since digital data transfer operations constitute initial conditions, such conditions that a received bit is mistakenly judged, or cannot be judged due to the influences of these items may occur. In order to solve these problems, IEEE 802.11 has employed the below-mentioned resend architecture.

Frame Check Sequence of the rightmost portion in the packet structure of IEEE 802.11 shown in Fig. 12 corresponds to a so-called "CRC checking purpose bit." The receiver can confirm that data can be received under normal condition by employing this CRC checking purpose bit. When the receiver can receive the data under normal condition, the receiver returns ACK, whereas when the receiver cannot receive the data under normal condition, the receiver does not return ACK.

After the transmitter transmits a data packet, the transmitter waits ACK for a predetermined time period. In such a case that the ACK is not returned, the transmitter judges that the data packet could not be received under normal condition, or the data packet reception itself was not carried out, and thus, again transmits a data packet. In the case of wireless communication, even when the receiver cannot receive under normal condition due to some interference, or deteriorated sensitivities, there are some possibilities that interference condition itself is temporally varied. As a result, probability of reception success may be improved by the re-sending operation.

When a packet length is set to a long length, error probability (packet error rate, will be referred to as "PER" hereinafter) per a packet is deteriorated. The below-mentioned explanation is made based upon such as initial condition that noise occurrence probability per a bit is random. Such an assumption that the noise occurrence probability is random when a sensitivity is deteriorated is appropriate.

In case of multipath, when a terminal is not moved, or even when the terminal is moved, in such a case where a move speed is very slow, there are some cases that the noise occurrence probability is not random. However, while IEEE 802.11a and IEEE 802.11g utilize the OFDM modulating techniques, the multi-path within a certain range can be removed. As a result, such an assumption that the noise occurrence probability is random has a good reason.

At this time, it is so assumed that PER when the packet length is "s" is equal to "q." At this time, assuming now that a packet length is equal to "nXs", RER of this condition is expressed by PERₙ = 1 - (1-q)ⁿ. Since 0 ≤ q ≤ 1, it becomes PER ≤ PERₙ, so that the error rate is deteriorated.

Also, when information of a bit rate "r" (bps) is transferred, if the packet length is assumed as n X s, then a total packet number per 1 second is expressed by P = r/ (n X S), and a total packet error number per unit time is expressed by P X PERₙ. A total resending time is defined in such a manner that when a packet transmission is continued for T hours, a total number or packets which constitute errors become smaller than 1. Since the packet error rate when the packet is resent "K" times is equal to "PERₙ^{K}, it may be given as P X PERₙ^{K} X T X 3600 < 1.

As a consequence, the necessary resending time is expressed by : K > (log(n) + log(s)-log(r) - long (T) - 2 - 2log6}/log{1 - (1-q)n} - 1.

As one example, Fig. 14 indicates a calculation result made by that a total number of TS packets is calculated with respect to a resending time in such a case where a plurality of MPEG-TS packets are entered to 1 wireless packet. It should be noted that in the formula 1, the parameters are given as follows: T = 10, q = 0.05, r = 24 Mbps. On the other hand, since such a packet which constitutes a packet error is resent, a total number of packets which are required to be transmitted in the case of resending time "K" is expressed by P X ∑ (1 + PERₙⁱ) (i=1-K). Fig. 15 indicates a transfer time which is determined based upon the above-described condition. In this example, it is so assumed that the packet error is 0.05 during transferring operation of 1000 bytes.

For example, in order that MPEG-TS data of 24 Mbps is transmitted, 15, 958 pieces of TS packets must be transmitted. In 100 mS, 1596 pieces of TS packets must be sent out. As can be seen from Fig. 15, in order to transmit data of 24 Mbps when the PHY rate is 36 Mbps, a total number of TS packets per 1 wireless packet larger than, or equal to 7 are required under this error rate condition. At this time, a maximum resending time becomes 7 times. As a consequence, as to the isochronous data, since the isochronous data is transferred in the wireless manner based upon the above-described rule, such a data communication which is fitted to the desirable condition can be carried out. In this example, the packet length of the wireless packet containing the 7 TS packets becomes the shortest packet length of the wireless packet.

Next, a description is made of a packet length which is suitable for an asynchronous transferring operation. As previously explained, in the case of the isochronous transferring operation, there is a merit to achieve the effective transferring operation if the packet length is set to the long packet length. However, the total resending time is increased. Also, with respect to isochronous data which are transferred by a wireless packet, this wireless packet must be set in such a manner that the packet length does not exceed 2304 X bytes (= maximum packet length). Also, for instance, assuming now that the PHY rate is selected to be 36 Mbps, if the throughput of 24 Mbps is secured, then the remaining band (namely, band which may be used for asynchronous transfer purpose) is reduced.

In an asynchronous transferring operation, there are many data contents whose transferring operations are permitted by the best effort system except for a portion of application programs. As a consequence, even in wireless operations, it is desirable that first of all, a communication path is used so as to transfer information which is transmitted from IEEE 1394 in the isochronous mode, and then, the remaining portion thereof is used so as to transfer information sent in the asynchronous mode.

As previously explained, in the case where the packet length of the isochronous information is set to become long, since the possibility of the resending operation is increased, the occupation probability of the communication path by the isochronous information is increased, as compared with that when the isochronous information is transferred based upon IEEE 1394. As a consequence, there are many possibilities that even when the information transmitted in the asynchronous mode is received, this received information cannot be immediately transferred in the wireless manner. As a result, the received asynchronous information is once buffered, and then, is transmitted within a gap period while the isochronous information is transferred.

At this time, the gap period of the isochronous information transferring operation is determined based upon a relationship between a PHY rate and a desirable throughput, and either the packet length or the resending time. In order to transfer the asynchronous information even in a small data amount, it is desirable to set the packet length to become a short packet length which may be transferred even within a short gap period. Accordingly, in such a case where the information is transmitted in the asynchronous transferring operation, it is preferable that the packet length is conversely set to become short, as compared with that of the isochronous transferring operation.

Since the packet length of the asynchronous transferring operation is set to become short, another effect may be achieved. That is, as being considered in the above explanation, when the packet length is short, a total necessary time of resending operations is also decreased. When the asynchronous information is transferred whose transmission chance is originally low, the resending time is increased, so that more longthly time is required in order to transfer the required information. This may conduct delays of information transferring operations.

For example, when authentication information of DTCP is transferred, a response within 100 ms is required. However, when this authentication information is transmitted by the asynchronous transfer system, a lengthy time is required by that information transmitted from an appliance operated on IEEE 1394 is converted into wireless information, this wireless information is transmitted to a wireless appliance, response information thereof is converted from the wireless information to IEEE 1394, and then, the converted information of IEEE 1394 is propagated to a transmission appliance. As a result, there are some cases that this response cannot be covered by the rule of 100 ms. Also, even when a response can be covered by the rule, such a problem that an operation speed is deteriorated due to a transfer delay may be conceived. Furthermore, if all of asynchronous information received during transmission waiting operation are not stored in a buffer, then the information is dropped, so that delay time must be reduced. As a consequence, it is possible to understand that when the asynchronous information is transmitted, it is preferable to transmit the asynchronous information with a short packet length, which is different from the packet length of the isochronous transferring operation.

Next, a description is made of operations as to the packetizing units 230 and 240 indicated in Fig. 5. The packetizing units 230 and 240 are arranged by a portion for packetizing isochronous information, or asynchronous information in different packet lengths from each other; and a portion for adding a header portion to the packetized respective information.

In IEEE 1394, packetizing of isochronous information is defined based upon IEC 61883. For example, in the case of an MPEG-TS signal, such information mode which may be divided every TS packet has been employed. As a result, in the packetizing operation in this case, the MPEG-TS signal may be packetized in such a manner that a plurality of TS packets are coupled to each other so as to constitute a Frame Body of one wireless packet. In the above-considered case, 7 pieces of the TS packets are employed to constitute one packet. In this case, although a fragmentation of the information is not required, the execution of the fragmentation is not prohibited, depending upon application programs.

As previously described, asynchronous data is packetized with a shorter packet length, as compared with that of isochronous data. It should also be understood that this packetizing method is especially advantage in such a case that a band occupied by the isochronous data is large with respect to the asynchronous data on the network of IEEE 1394, and these isochronous and asynchronous data are transferred in the wireless manner. It should also be noted that since lengths of asynchronous data are different from each other depending upon contents of information, if the asynchronous data is directly entered to a Frame Body of an IEEE 802.11 packet, then there are some possibilities that the packet length of the packet for transferring the asynchronous data may become longer than the packet length of the packet for transferring the isochronous data. In this case, there are some possibilities that the asynchronous data is fragmentation-processed so as to shorten the packet length of the packet for transferring the asynchronous data, so that the asynchronous data may be transferred. At this time, it is more preferable to set the packet length divided by the fragmentation in such a manner that a maximum length of a packet for transferring the isochronous data becomes longer than a maximum length of a packet for transferring the asynchronous data. Since the method of the fragmentation need not be limited, this method is omitted.

Next, a description is made of a method for applying a destination address and a source address within header information. In this case, the below-mentioned description is related to such a case that IEEE 1394 information which has been transmitted while a user does not become aware of a wireless transferring operation is transferred in a wireless manner. As a consequence, in IEEE 1394, since the information is transmitted by designating only a node ID of an IEEE 1394/wireless bridge, an address in a wireless operation must be applied to this information in order to route this information in the wireless operation. Although the below-mentioned two methods will be explained, the present invention is not limited thereto.
(Method 1) In the case where the bridge in this case has been arranged with a wireless receiving terminal in a set structure (namely, in case that P to P), a transmitting person is necessarily identical to a receiving person in the wireless operation. As a result, an address which should be applied when a header is applied is exclusively determined. To this end, an address of the receiving terminal is designated as the destination address, and the own address is designated as the source address, so that the communication is available.
(Method 2) The bridge has a table between an IEEE 1394 information transmitter and an address of a wireless receiving terminal. When the IEEE 1394 information is received, the bridge determines a destination address by referring to this table. As a result, information as to different wireless terminals can be transferred based upon the sort of IEEE 1394 transmitter.

Since the packet is produced which is transferred in the wireless manner based upon the above-explained process operations, the produced packet is transferred in the wireless manner in accordance with the IEEE 802.11 rule, so that the information transferring operation can be carried out (step S5) .

In the information communication apparatus 100, according to the embodiment mode 1, equipped with: the IEEE 1394 receiving unit 210 for receiving the information transferred based upon the communication system containing both the isochronous communication system and the asynchronous communication system; and the IEEE 802.11 transmitting unit 300 for transmitting the information based upon the wireless communication system, the information communication apparatus 100 is comprised of: the packetizing unit (1) 230 for converting the information transferred based upon the isochronous communication system into the packet of the wireless communication system; and the packetizing unit (2) 240 for converting the information transferred based upon the asynchronous communication system into the packet of the wireless communication system based upon the above-described packet of the isochronous communication system converted by the packetizing unit (1) 230. In this information communication apparatus 100, a packet length of the packet converted by the packetizing unit (1) 230 and a packet length of the packet converted by the packetizing unit (2) 240 can be made different from each other based upon such a fact that since the packet length of the packet converted by the packetizing unit (1) 230 becomes longer than the packet length of the packet converted by the packetizing unit (2) 240, desirable values as to packet values are different from each other which are required in the case that the isochronous data and the asynchronous data are transferred respectively in the wireless manner. In this case, the packet length of the isochronous data is set to be a long packet length, whereas the packet length of the asynchronous data is set to be a short packet length. As a result, the QoS of the isochronous data can be effectively secured, and also, the asynchronous data can be transferred with a slight delay. Also, since the packet length of the isochronous data is set to be the long packet length, the high throughput can be achieved, as compared with the PHY rate. Further, the QoS can be secured under this condition. Also, since the packet length of the asynchronous data is set to be the short packet length, the delay of the asynchronous data can be reduced. As a consequence, it is possible to avoid the failure in the information transferring operation due to the response delay, and also to avoid that the operation speed is lowered, so that the buffer capacity can be reduced.

### (EMBODIMENT MODE 2)

The above-explained embodiment mode has exemplified the necessity of rearranging the packet length of the asynchronous data in such an initial condition that the band occupation ratio of the isochronous data is high which is transferred in the wireless mode, and only the narrow band is secured with respect to the asynchronous data. However, in such a case where isochronous data is not transferred ,or even if the isochronous data is transferred, only a narrow band is required for transferring the isochronous data, a wide band may be allocated so as to transfer asynchronous data.

As previously described, as to a wireless packet length which should be given to asynchronous data, a condition is changed, depending upon a band occupation ratio of isochronous data. As a consequence, the restriction for the wireless packet length of the asynchronous data is caused to be varied based upon this condition, so that the data can be transferred in a higher quality.

A band occupation ratio of isochronous data may be conducted based upon a ratio of a throughput on a wireless operation with respect to a bit rate of isochronous data. In the case where a plurality of isochronous data are present, band occupation ratios of these plural isochronous data are summed to obtain a desirable band occupation ratio. Although the throughput on the wireless operation is varied depending upon electromagnetic wave conditions, if the electromagnetic wave condition is not considerably varied, then this throughput has a correlative relationship with a PHY rate. An IEEE 1394-wireless bridge may contain a wireless transmitting unit, or may perform at least a communication operation, so that the PHY rate may be grasped.

On the other hand, as to a bit rate of isochronous data, since a plug register of a transmission apparatus operated on IEEE 1394 is accessed, information can be acquired, and since the IEEE 1394-wireless bridge contains at least an IEEE 1394 receiving unit, or may perform at least a communication operation, the bit rate of the isochronous data may be grasped. As a result, a packet length of a wireless packet for transmitting the isochronous data can be determined in accordance with a previously given formula based upon these two data. It should be understood that in IEEE 802.11a, or IEEE 802.11g, since OFDM is employed as the modulation system, the PHY rate may be acquired based upon the modulation system information.

### (EMBODIMENT MODE 3)

As a derivation of the embodiment mode 2, such a method may be realized which employs not only a transfer rate, but also an actual wireless throughput corresponding to an actual data transfer rate. The actual wireless throughput may be grasped in such a manner that a throughput is measured by a wireless receiving terminal, and then, this actual wireless throughput is grasped based upon a packet error rate. Since this result is transferred to a wireless transmitting terminal, this method may be realized. Since several known methods have been proposed as the concrete methods, a detailed explanation thereof is omitted in the present specification.

The present patent application has been made based upon Japanese Patent Application (JP-A-2004-211327) filed on July 20, 2004, the contents of which are incorporated herein as references.

## Claims

1. An information communication apparatus having first information communicating means for receiving information which is transferred based upon a communication system containing an isochronous communication system and an asynchronous communication system; and second information communicating means for transmitting the information based upon a wireless communication system, comprising:
first converting means for converting the information which is transferred based upon the isochronous communication system into a packet based upon the wireless communication system; and
second converting means for converting the information which is transferred based upon the asynchronous communication system into a packet of said wireless communication system based upon the packet of the isochronous communication system converted by said first converting means; wherein:
a packet length of the packet converted by said first converting means becomes longer than a packet length of the packet converted by said second converting means.

2. An information communication apparatus as claimed in claim 1 wherein:
a maximum packet length of the packet converted by said first converting means becomes longer than a maximum packet length of the packet converted by said second converting means.

3. An information communication apparatus as claimed in claim 2 wherein:
said second converting means calculates the maximum length of the packet of said asynchronous communication information based upon a communication rate employed in said wireless communication system and a bit rate value of the information which is transferred based upon the isochronous communication system.

4. An information communication apparatus as claimed in claim 3 wherein:
said second converting means calculates the communication rate employed in said wireless communication system based upon information about a modulation system.

5. An information communication apparatus as claimed in claim 3 wherein:
said second converting means calculates the communication rate employed in said wireless communication system based upon an actual data transfer rate.

6. An information communication apparatus as claimed in claim 5 wherein:
said second converting means calculates said actual data transfer rate based upon a packet error rate.

7. An information communication apparatus as claimed in claim 3 wherein:
said second converting means acquires said bit rate value of the information transferred based upon said isochronous communication system from said first information communicating means.

8. An information communication apparatus as claimed in claim 7 wherein:
said second converting means acquires said bit rate value of the information transferred based upon said isochronous communication system from register information of said first information communicating means.

9. An information communication apparatus as claimed in any one of claim 1 to claim 12 wherein:
said first information communicating means is connected to an IEEE 1394 network, and said second information communicating means is connected to an IEEE 802.11 network.

10. An information communication method with employment of: first information communicating means for receiving information which is transferred based upon a communication system containing an isochronous communication system and an asynchronous communication system; and second information communicating means for transmitting the information based upon a wireless communication system, comprising:
a first converting step for converting the information which is transferred based upon the isochronous communication system into a packet based upon the wireless communication system; and
a second converting step for converting the information which is transferred based upon the asynchronous communication system into a packet of said wireless communication system based upon the packet of the isochronous communication system converted by said first converting means; wherein:
a packet length of the packet converted by said first converting step becomes longer than a packet length of the packet converted by said second converting step.

11. A program for performing an information communication by employing: first information communicating means for receiving information which is transferred based upon a communication system containing an isochronous communication system and an asynchronous communication system; and second information communicating means for transmitting the information based upon a wireless communication system, wherein:
said program causes a computer to execute:
a first converting step for converting the information which is transferred based upon the isochronous communication system into a packet based upon the wireless communication system; and
a second converting step for converting the information which is transferred based upon the asynchronous communication system into a packet of said wireless communication system based upon the packet of the isochronous communication system converted by said first converting means; and wherein:
a packet length of the packet converted by said first converting step becomes longer than a packet length of the packet converted by said second converting step.
